# EUROPEAN PATENT APPLICATION

(11) **EP 0 612 131 A2**
(43) Date of publication of application: **24.08.1994**
(21) Application number: 94301084.3
(22) Date of filing: 15.02.1994
(51) Int. Cl.: H02G 3/08

(54) **Improvements in and relating to switches**

(30) Priority: 16.02.1993 GB 9303026; 10.12.1993 GB 9325372
(71) Applicant: Mew, Raymond, Anglesey, Gwynedd LL6H 9NB (GB); Mew, Jeanette, Anglesey, Gwynedd LL6H 9NB (GB)
(72) Inventor: Mew, Raymond, Amlwch, Anglesey, Gwynedd, LL6H 9NB (GB)
(74) Representative: Lawrence, John

(57) **Abstract**

In the invention we provide an electricity supply unit (3) having separate primary (1) and secondary (2) chambers, in which the primary chamber (1) is sealed and connected to the mains and the secondary chamber (2) is accessible to the user for electrical connections and has a common earth within the primary chamber. This enables the electricity supply company to fit the unit and seal the primary chamber (1) and another party to make connections to the secondary chamber (2) without disturbing the primary chamber (1).

To be accompanied when published by Figure la of the drawings.

## Description

This invention relates to improvements in and relating to switches, and especially, but not exclusively, to switches associated with cut-out units for street furniture such as lamp post, signs and the like.

There are many known switches.

The field of cut-out units for street furniture conventionally uses a separate, add-on, switch to be used in series with a separate cut-out unit.

An aim of the present invention is to provide a new arrangement for street furniture cut-outs, and switches for them.

According to a first aspect of the invention, we provide a switch having a first member and a second member movable between a closed condition in which the switch is closed and an open condition in which the switch is open, one of the members incorporating a cut-out unit for street furniture.

Alternatively we may provide street furniture incorporating such a switch or cut-out unit.

According to a second aspect of the invention we provide an electricity supply unit comprising a housing defining a primary chamber adapted to receive an electrical cable so as to provide a primary supply of electricity to the primary chamber, and a separate secondary chamber; in which the primary chamber is sealed closed to prevent, or indicate, unauthorised entry to the primary chamber, but in which the secondary chamber is accessible to the user for electrical connections and has a common earth with the primary chamber.

This enables the electricity supply company to fit the unit and seal the primary chamber and another party, possibly a local council, to make connections to the secondary chamber without disturbing the primary chamber. This can be useful for original installation of street furniture, and also for subsequent modification. For example, if the council decides to alter their requirements they can adjust the connections in the secondary chamber and not incur the cost of having the Electricity Board alter the primary connections.

The secondary chamber may also have a live and/or neutral connection, preferably formed by members extending from the primary chamber. The secondary chamber may provide a controlled, fused, supply of electricity.

The primary and secondary chambers may be divided by a common dividing wall or plate. Sealing means may be provided preventing the removal of the dividing plate.

The secondary chamber may be on top of the primary chamber.

The housing may comprise a primary chamber member and secondary chamber member which is removable from the primary chamber member.

According to a third aspect of the invention we provide a method of wiring an item of street furniture into the mains supply of electricity comprising connecting the mains supply to the primary chamber of a power supply unit having a primary chamber, sealing the primary chamber, and then connecting a cut-out unit of the street furniture to the power supply unit.

Preferably the power supply unit has a secondary chamber having an earth which is common with the earth of the primary chamber, and which is accessible without breaking the seal of the primary chamber.

According to a fourth aspect of the invention we provide a method of repairing, maintaining, or modifying a cut-out unit of street furniture comprising detaching or separating the cut-out unit from a power supply unit, and then working on the cut-out unit.

Preferably the cut-out unit has a push-fit connection with the power supply unit. Preferably the electrical contact between the power supply unit and the cut-out unit is via plug/socket connections.

According to a fifth aspect of the invention we provide a method of testing a cut-out unit for street furniture comprising providing the housing of a cut-out unit with an externally provided test port to enable diagnostic tests to be performed, or a housing having a built-in diagnostics facility.

The method preferably comprises providing the test port or diagnostic display on the cover of the cut-out housing which is preferably removable.

Preferably the method comprises taking a first cover from the cut-out unit which does not have a test port or a built-in diagnostics facility, and replacing it with a second cover which does have a test port or a built-in diagnostics facility.

Preferably the first cover is replaced after the test, and the second cover is free to be used to test another cut-out unit.

According to another aspect of the invention we provide a housing component adapted to be fitted to a cut-out unit of street furniture, the housing component in use assisting to cover or enclose the electrical components of the cut-out unit and having a test port to enable diagnostic tests to be performed on the cut-out unit with the housing component in place, or having a built-in diagnostic test means.

Preferably the housing component is a cover member.

According to a further aspect of the invention we provide a cut-out unit for street furniture having either diagnostic testing means provided with it, or a test port to enable diagnostic testing to be carried out.

Preferably the test port, or a visual display of the diagnostic tests, is accessible externally of the cut-out unit.

We may also provide a kit comprising a cover member, having a diagnostic display facility, or a test port, and a cut-out unit having a cover with no diagnostic testing.

According to another aspect of the invention we provide a separable switching or cut-out unit comprising a switch unit and a supply unit, the switch unit being detachable from and re-connectable to the supply unit.

Preferably the switching or cut-out unit is de-mountable from and re-mountable upon the supply unit.

We may also provide street furniture having a cut-out unit or an electricity supply unit in accordance with any aspect of the invention.

An embodiment of the invention will now be described by way of example only with reference to the accompanying drawings of which:-
Figure 1a shows a power supply unit and associated cut-out unit for a lamp post electricity supply with the switch of the cut-out unit in its on position;
Figure 1b shows the power supply unit and associated cut-out unit of Figure 1, but with the switch in its off position;
Figure 2 shows the inside of a cover of the cut-out unit of Figure 1a;
Figure 3 shows a side view of a housing member of the cut-out unit of Figure 1a;
Figure 4 shows a plan view of the housing member of Figure 3;
Figure 5 shows from above a sole plate of the cut-out unit of Figure 1a;
Figure 6 shows another component of the cut-out unit;
Figure 7 shows the cut-out unit and associated power supply unit of Figure la, but with their respective cover members removed;
Figure 8 shows the cover member of the power supply unit;
Figure 9 shows the power supply unit;
Figure 10 shows the power supply unit with its cover member removed;
Figure 11 shows the power supply unit with its cover member removed, and with a further component removed;
Figure 12 shows the circuit of the cut-out unit;
Figure 13 shows a test cover member for use with the cut-out unit in place of the cover member shown in Figure 1a;
Figure 14 shows plan view an alternative embodiment of a power supply unit and associated cut-out unit for a street furniture electricity supply with the switch of the cut-out unit in its on position; and
Figure 15 shows a side view of the power supply and associated cut-out unit of Figure 14.

The reader is directed to read our co-pending British Patent Application Publication No. GB 2 261 116A. This will facilitate rapid understanding of some of the structure and operation of the present embodiment. The contents of GB 2 261 116A are hereby incorporated by reference.

A power supply unit 1 and an associated cut-out unit 2 are shown in the drawings. The units 1 and 2 are used in street furniture, such as lamp posts, signs, traffic lights, bollards and the like. The power supply unit 1 and the cut-out unit 2 are separable, but when assembled together form a compact combined unit 3. The electrical components of the switch and cut-out unit are contained within the cut-out unit 2, and the power supply connections within the unit 1.

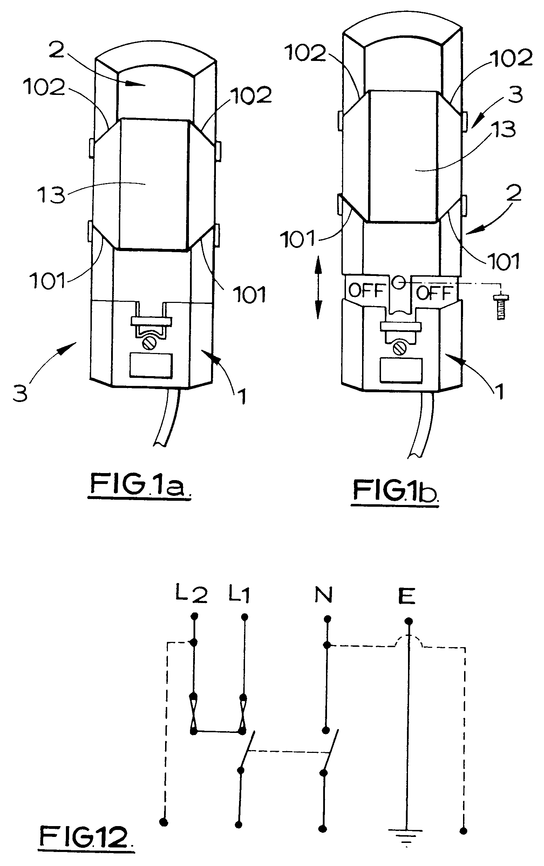

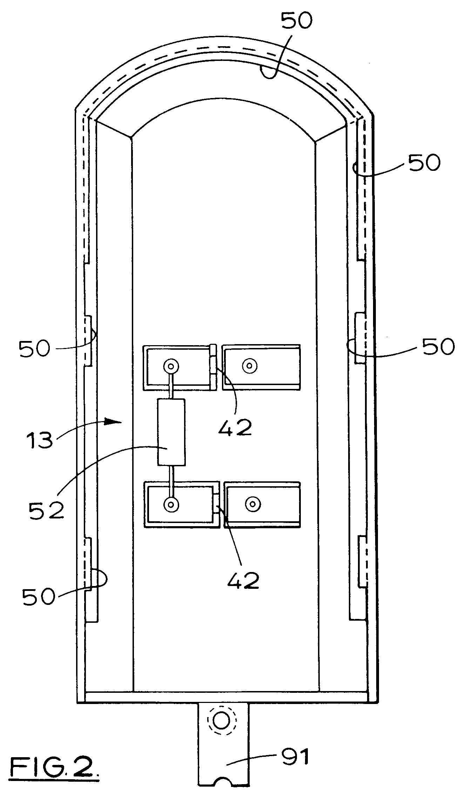

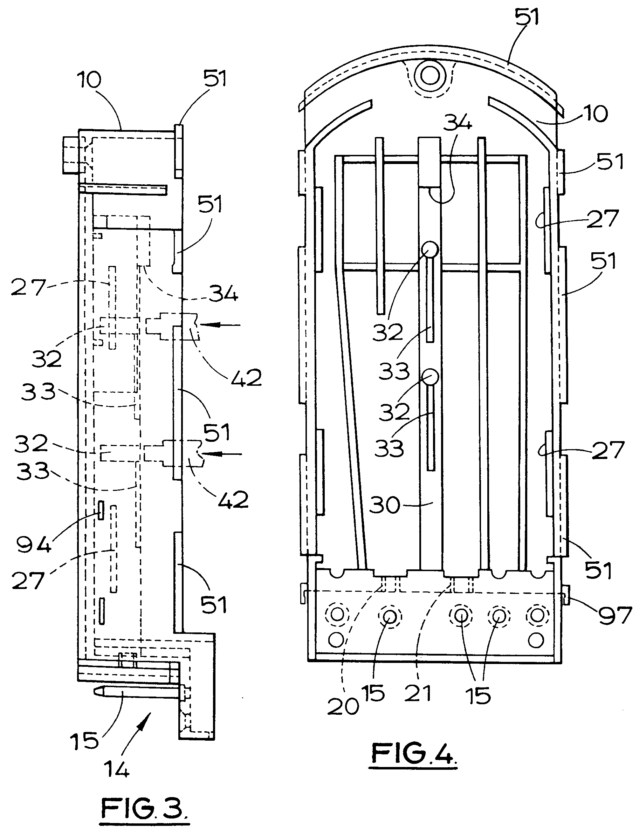

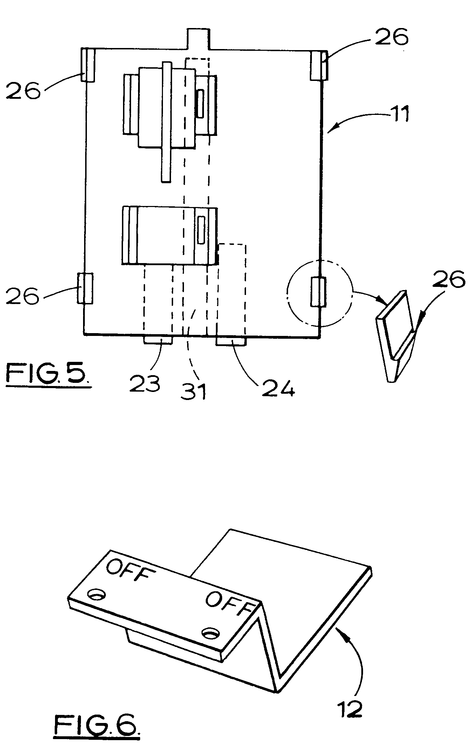

The cut-out unit 2 is best seen in Figures 1 to 7 and comprises a back housing member 10, a sole plate 11 mounted in the housing for sliding movement in a linear manner, a stepped plate 12, and a removable cover member 13.

The housing member 10 has power input means 14 at its bottom end, comprising an array of pins 15; power output means 16, comprising terminal connections 17 (live), 18 (neutral) and 19 (earth), at its upper end; and components 20 and 21 of a double pole switch 22 adapted to connect the power input means 14 with the power output means 16.

The sole plate 11 has mounted on its lower surface components 23 and 24 of the switch 22 adapted to co-operate with the components 20 and 21. The upper surface of the sole plate carries components which co-operate with fuse-carrying components of the cover of the unit 2 (discussed later).

The sole plate can move (in this example slide) between an on position in which the switch 22 is closed and fused power is provided to the power output means 16, and an off position in which no power reaches the output means 16.

The sole plate 11 has flanges or teeth 26 at its sides which locate beneath co-operating flanges or teeth 27 provided on side walls of the housing 10. The flanges 26 and 27 allow sliding movement of the sole plate, but retain it to the housing 10.

The housing 10 has a central rib 30 which comprises guide means to assist in guiding the movement of the sole plate 11, the sole plate having a co-operating channel 31 provided in its underside. The rib 30 houses two spring biased buttons 32 provided at the head of grooves or slots 33 in the rib 30. The buttons 32 are spring biased to project above the upper surface of the rib 30 and into engagement with a locking formations on the underside of the sole plate 11 so as to lock the sole plate in its off position. The rib 30 also defines an abutment stop 34 which abuts, or is close to, the top edge of the sole plate when the sole plate is in its off position.

With the sole plate locked in its off position the street furniture is isolated from the electricity supply.

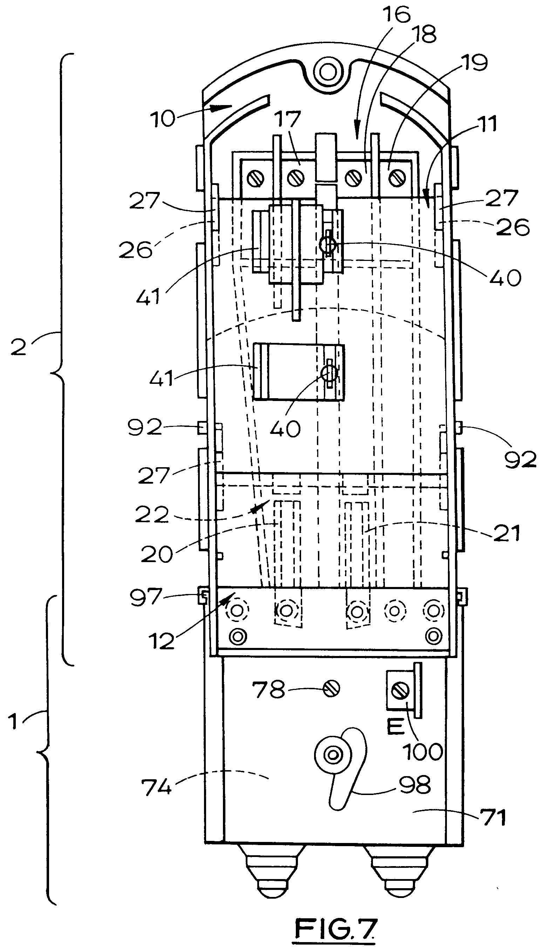

The user cannot accidentally push the sole plate back to its on position (downwards as seen in Figure 7) because the buttons 32 are biased into engagement with the locking formations on the underside of the sole plate. The buttons 32 do not project all the way through the sole plate.

The sole plate has through-slots 40 over the buttons 32 (when it is in the off position). The slots 40 are covered by spring clips 41, but are accessible to complementary release prongs 42 provided extending from the underside of the cover member 13. When the cover member 13 is pressed fully home over the housing 10 the prongs 42 push the buttons 32 out of the way, and allowing the safety catch that they form to be released, allowing the sole plate 11 to move to its on position. The cover member 13 is slid downwards (as seen in Figure 1b) to operate the switch 22. The prongs 42 also provide the force transfer means for transferring the longitudinal sliding force applied to the cover member (to slide the cover member to its on position) to the sole plate so that the sole plate slides with the cover member. The prongs 42 also form part of the electrical circuit when the cover is closed. They have a removable and replaceable fuse 52 extending between them. The fuse is in the electrical pathway between the power input means 14 and the power output means 16 when the cover is in its closed position. The tips of the prongs 42 slide in the grooves 33.

Thus the cover member is arranged such that the act of moving it to open the cut-out unit for access switches off the switch so that the inside of the cut-out unit is not live. In this example the power cannot be supplied to the cut-out unit again until the cover member is moved to its closed position. The movement of the cover member in this example is a sliding movement to open the cut-out unit for access, but that opening movement could be some other movement (for example it could be pivoted or moved arcuately, or it could be pulled off towards the user to isolate the cut-out and gain access).

The cover member has flanges, or teeth 50 at its periphery which when the cover member is in its off position interlace with flanges or teeth 51 at the upper edge of the side walls of the housing, but do not overlap (with the cover member in its off position). This allows the cover member to be pulled off, towards the user. When the cover member is slid down to its on position the flanges 50 locate behind the flanges 51 and prevent the cover member from being pulled off towards the user. The flanges 50 and 51 ensure that the cover member is retained to the housing 10, covering the electrical components, when the switch 22 is closed.

As mentioned earlier, the cover member 13 also carries a fuse (or fuses) 52 which is part of the circuit linking the power input means 14 with the power output means 16 when the switch is closed. The fuse is downstream of the switch 22.

If the user opens the cover member he opens the switch 22. He cannot accidentally close the switch 22 because both buttons 32 need to be depressed to move the sole plate to close the switch.

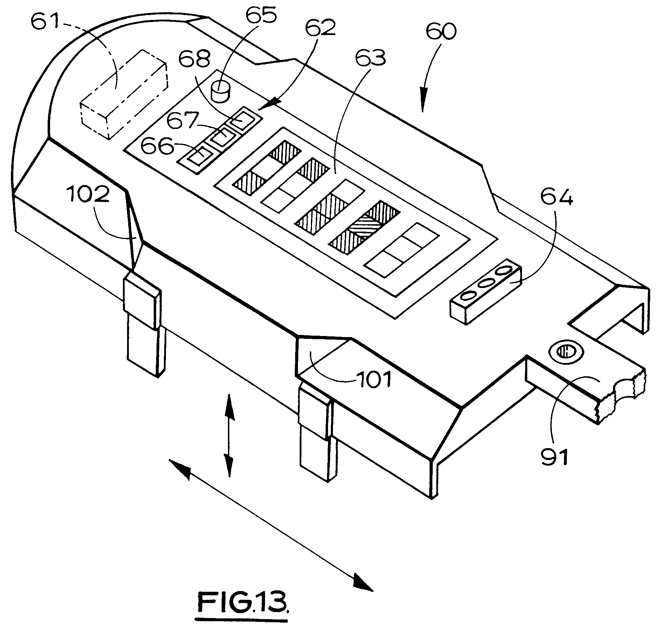

The cut-out unit described is very safe. However, it is difficult to test or check it because the cover is always on and closed when the switch is closed. Thus if there is a fault it is difficult to check which wire is loose, or to diagnose other faults. We therefore provide a test cover 60, shown in Figure 13.

The test cover 60 is substantially the same as cover 13, except that it has diagnostic test electronic circuitry 61, test result display means 62, a chart of possible test results 63, and a power point 64. There is also a test button 65.

The test result display means 62 comprises three lights 66, 67, and 68 (LED's) which come on in different combinations, depending upon the state of the wiring and of the unit.

The chart 63 shows that if the left and right lights come on, but not the middle light, then the unit is alright. If just one light comes on there is a neutral fault. If two adjacent lights come on, but not the third light, the live and neutral poles are reversed. If all three lights come on there is an earth fault. If no lights come on there is no power reaching the cut-out unit. Details of what the light combinations indicate are given on the chart 63.

The power point 64 provides a live, neutral, and earth terminal and can be used for further diagnostic tests (such as loop impedance or insulation resistance tests, or as a fault locator).

It will be appreciated that the cover member 60, incorporating a diagnostic module, is fused, and has prongs equivalent to prongs 42, and flanges 50.

The power point 64 can also be used to supply power, for example to temporary traffic lights, a temporary light or sign, to christmas tree lights, or to a workman's power tool. Thus we can give a workman a cover member which enables him to connect any lamp post (or other street furniture) fitted with a cut-out unit having a complementary housing into a power point for local work. This avoids having to have power supply cables running into buildings - they can just go to the nearest lamp post or bollard.

We may even provide cover members with a power supply point, but no internal test facility.

It will be appreciated that to test a cut-out unit the user removes the "normal" cover and replaces it with the test cover. The user will usually replace the original cover after testing, but may alternatively leave the test cover in place. The user may replace the original cover with a cover which has a plug-in port 64, but no visual test display.

It will also be appreciated that the visual display 62 and/or the port 64 need not be provided on the cover member, but could be provided on any external surface of the unit 2 (or even the combined assembly 3). The display 62 could, conceivably, be provided internally of the unit 2 if it is visible (and retains its display) after the cover member has been removed.

The power supply unit 1 is best seen in Figures 7 to 11 and comprises a main body member 70, a closure plate 7, and a secondary chamber cover 73. The main body member 70 defines a primary chamber 74 and has a mounting plate 75 and power supply means 76 comprising an array of sockets 77 provided towards the upper end of the primary chamber 74. The secondary chamber cover 73 assists to define the secondary chamber 75 when it is attached to the main body member 70, with the closure plate 71 in place. The plate 71 is screwed to the main body member 70 via screw 78 which is received in a screw threaded bore 79 of the main body member.

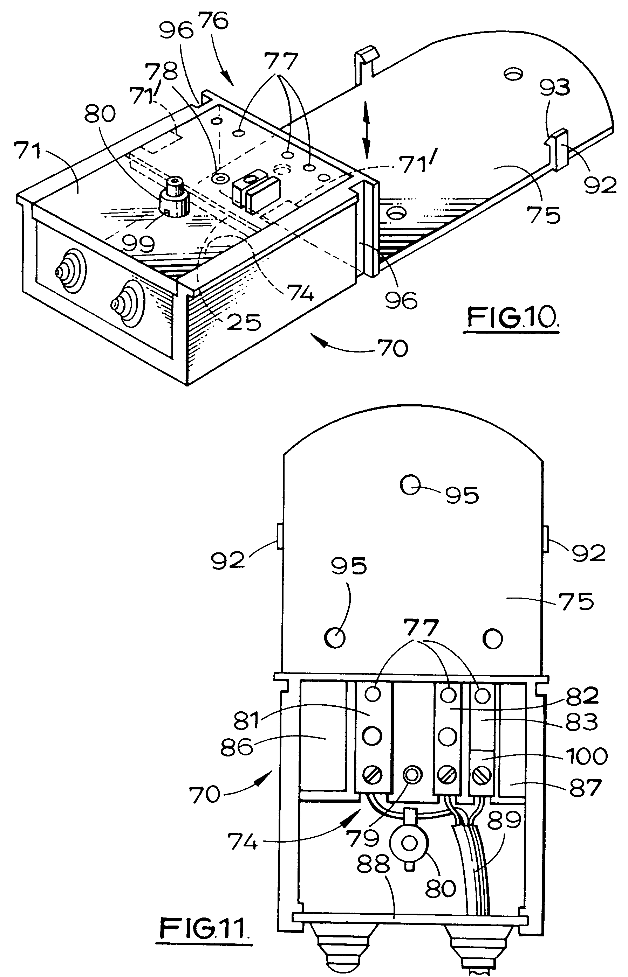

The primary chamber 74 is best seen in Figure 11 (which has the secondary chamber 73 and closure plate 71 removed). An upstanding boss 80 is provided and defines a screw threaded bore. Live, neutral and earth terminal blocks 81, 82, and 83 are provided in the primary chamber. The earth block has a projection 100 which projects upwards more than the live or neutral and extends through an aperture in the closure plate 71 and into a secondary chamber 84 defined above the closure plate by the secondary chamber cover 73. The secondary chamber cover 73 is held to the boss 80 by a screw 85. Two outer recesses 86 and 87 are also provided in the primary chamber, the recesses being capable of receiving additional terminal blocks for the provision of loop supply. The dividing plate 71 has weakened areas 71' (see Figure 10) provided in positions which will in use register with recesses 86 and 87 so that the weakened areas 71' can be apertured by the user to allow connection blocks to extend through. The underside of the plate 71 also has a stiffening traverse rib 25, or flange, which locates adjacent the moulding holding the terminal blocks 86 and 87, and defines a line at which the plate 71 can be broken by the user who could then use only the lower half of the plate (for example if the unit were in a private supply).

The lower wall of the secondary chamber is formed by a gland plate 88 which provides entry for a primary supply 89 of electricity. The gland plate may be slidably removed from the main body member and replaced with its glands facing inwards for convenient supply and packaging of the unit 1.

The secondary chamber cover 73 defines a channel 90 in which a tongue 91 of the cover member of the cut-out unit 2 is received in use. A bar 89 extends over the channel 88.

The mounting plate 75 has spring clips 92 having teeth which are releasably engageable with slots or recesses 94 provided in the side walls of the housing 13. The mounting plate 76 also has three mounting holes 95 so that it can be screwed to a mounting in the street furniture.

The main body member 70 also has ribs and grooves 96 which slidably interlock in use with complementary ribs and grooves 97 provided on the housing 13.

It will be appreciated that the housing 10 (and the rest of the cut-out unit 2) is releasably mounted (clipped) to the power supply unit 1. The pins 15 are received in the sockets 77 and in use receive power from them. The cut-out unit can be detached from the power supply unit by removing the cover member 13 (or sliding it up to its off position where the tongue 91 clears the bar 91), prising out the snap-fit teeth 93, and pulling the cut-out unit towards the user. The cut-out unit can be removed with the secondary chamber cover 73 still in place.

The cut-out unit has been designed to be operated in confined spaces and can be moved to its upper, switch open, position with one hand pushing on inclined faces 101. it can be slid back to its closed position by one hand, by pushing on inclined surfaces 102. It can be removed from the housing 10 by pulling on tongue 91 alone (with one finger). It is pushed back onto the housing 10 in a straight line.

The electricity supply company can connect its primary electricity supply to the terminals 81, 82, and 83 in the primary chamber, fit the closure plate 71, and then seal the primary chamber (for example by passing a wire seal 98 through a hole 99 in the boss 80, above the level of the closure plate - see Figure 7). They can thereby install the power supply unit 1, and leave it without a cut-out unit 2. A local, different, operator can then fit the cut-out unit 2 simply by pushing it (with the switch off) onto the power supply unit.

The local user can gain access to the secondary chamber, but not the primary chamber. This allows him access to the common earth projection 100. The local user can feed power supply back from the power output means 16 to the secondary chamber to loop into the secondary chamber so that the secondary chamber can act as a power supply source. All of this can be done without touching the primary chamber, and so the primary supplier of electricity need not be involved.

A particularly useful way of looping to provide an additional, fused, power supply is to provide connection blocks in the chambers 86 and 87 (see Figure 11), break the weakened areas 71' and extend the connection blocks through the closure plate 71 into the secondary chamber. Power can then be taken from the power output means 16, fused (via an additional fuse), and fed to the live and neutral terminals in the secondary chamber (extending from chambers 86 and 87). This is shown in Figure 12 in dotted lines. The installer/sealer of the primary chamber needs to do this before sealing the primary chamber.

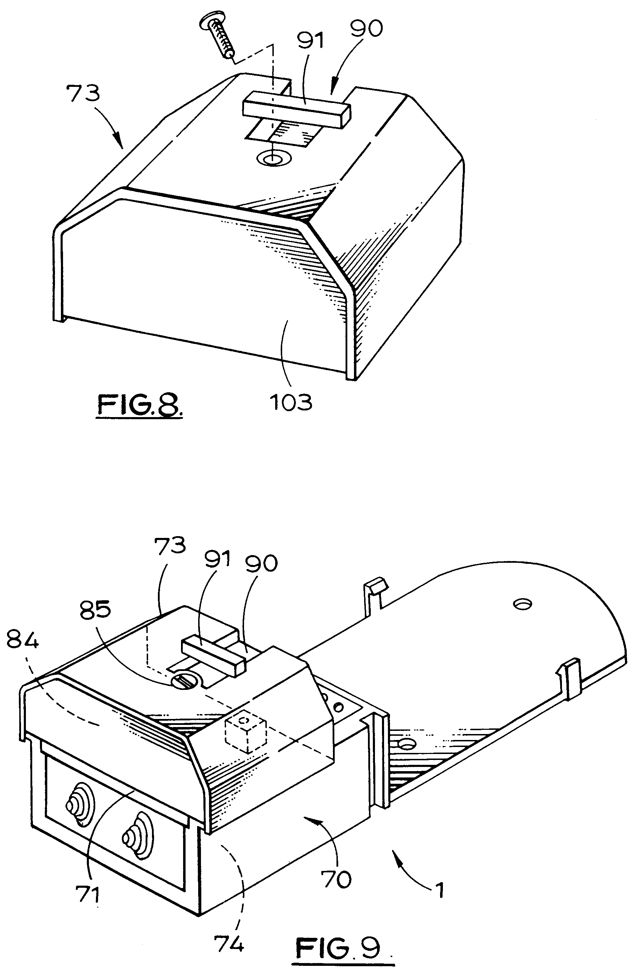

A second powered apparatus can then be fed by a downward outgoing loop feed from the secondary chamber. The lower wall of the secondary chamber may be slidably removable and replaceable with another, in a similar manner to the wall 88. This wall, is referenced 103 in Figure 8, but no glands are shown. The advantage of a looped supply to the secondary chamber is that it is fused, and that the installer of the primary chamber need not be called back to break its seal.

The bar 91 assists in preventing removal of the cover member 13 if it is not in its off position. Furthermore, when the cover member is in its off position (or when it is removed altogether) the bar 91 can enable the cut-out to be locked in its off position. For example the hasp of a padlock can be passed around the bar and the padlock locked, preventing the cover member from being closed. Alternatively the user could simply remove the cover member altogether and keep it.

It will be appreciated that the power supply unit will be mounted on a mounting board in, for example, street lighting via its triangular disposed mounting holes 95. These allow for slight re-positioning of the power supply unit if the local user needs to re-orientate it slightly, without involving the primary electricity supplier.

The fuses of the cut-out unit can be easily removed, tested, and exchanged. Once the switch unit cover is removed all accessible contact parts are isolated from the electricity supply. It will be noted that the fuse carrier (cover member) can be inserted and withdrawn from the electrical circuit only when the switch is turned off. This improves the safety of the device.

The combined assembly provides a de-mountable fused switching unit. Should the local user wish to change their requirements for the switching unit (for example adding a loop feed to another electrical appliance) they can simply demount the existing switch unit, replace it with a new one meeting their requirements, and put the old switching unit into their stores for re-use. This is quick, and does not involve the expense of having to gain access to the primary member.

Approximately 75% of the periphery of the cover of the switch unit is locked around the periphery flanges of the housing 10 when the cover is closed. This reduces the risk of the cover being forced off by fuse ejection, if there is a fault. There is also a neutral lead/lag in make/break connections of the switch of about 3 minutes to improve safety. If desired, the neutral and earth terminals in the primary chamber can be strapped together to provide a protective multiple earth facility.

It will be noted that a part of the stepped plate 12 is revealed by the cover when the cover is in its off position, and the stepped plate clearly indicates the status of the switch.

The units 1 and 2 will usually be made of ABS plastics material and provide a good mechanical protection to the electrical components, in addition to that provided by the outside door or access panel in the street furniture itself.

It will also be appreciated that the secondary chamber of the power supply unit may be supplied originally with "live" and "neutral" terminals, preferably extending through from the primary chamber (but not of course directly connected to the live and neutral terminals of the primary chamber).

The embodiment shown provides a combined cut-out and switch and can serve as a street furniture distribution unit. It is a switched fused isolation unit.

The switched fused unit could have more than the two fused circuits shown. It could have three circuits with three fuses, or possibly even more fused circuits. This enables it effectively to become a distribution board.

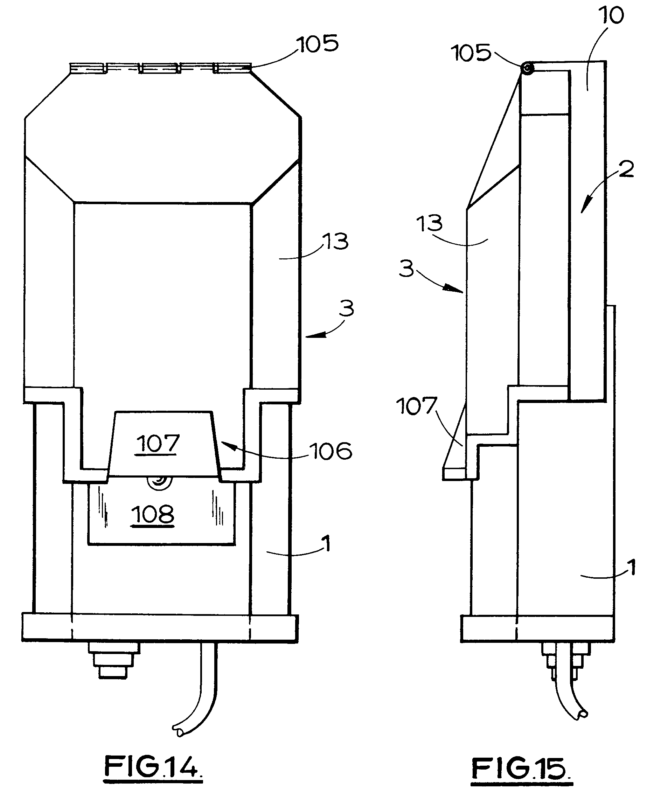

An alternative connection of a power supply unit 1 and an associated cut-out unit 2 is shown in Figures 14 and 15. In order to illustrate the similarity between the embodiments, like reference numerals have been used for like parts where appropriate.

The power supply unit 1 and the cut-out unit 2 are separable, and can be combined together to form a compact combined unit 3. The electrical components of the switch and cut-out unit are contained within the cut-out unit 2, and the power supply connections within the unit 1.

The cut-out unit 2 comprises a back housing member, a side plate (not shown) mounted in the housing, and a cover member 13 removable from the sole plate, but hingedly connected to the back housing member 10 by a hinge 105.

In this embodiment the sole plate is fixed. However, as in the previous embodiment the cover member is provided with release prongs to pass through the sole plate and complete a circuit such that the cut-out unit 2 becomes electrically connected to the power supply unit 1. Alternatively the cover member may be provided with formations which, when brought towards the main body of the unit, act so as to cause the switch to close (and similarly the moving of the cover member away from the main body causes the switch to open).

When the cover member 13 is removed, by swinging it away from the cut-out unit 2 upon the hinge 105, the circuit is broken and the cut-out unit 2 is- isolated from the power supply unit 1.

A finger-hold 106 is provided to enable the cover member to be moved about the hinge 105 more easily. The finger-hold 106 comprises a raised flange 107 on the cover member 13 and a complementary recess 108 in the power supply unit 1.

It will be appreciated that the power supply units and cut-out units described herein will usually be used in lamposts, illuminated bollards, illuminated signs and signposts, and indeed any street furniture.

## Claims

1. A street furniture electricity supply unit comprising a housing, said housing defining a primary chamber (74) adapted to receive an electrical cable so as to provide a primary supply (84) of electricity to said primary chamber (74), and a separate secondary chamber, said primary chamber (75) being sealed closed to prevent, or indicate, unauthorised entry to said primary chamber, but in which said secondary chamber is accessible to a user for electrical connections; said housing further comprising an earth (83; 100) common to said primary chamber (74) and said secondary chamber (75).

2. A street furniture electricity supply unit (1) comprising a housing, said housing defining a primary chamber (74) adapted to receive an electrical cable so as to provide a primary supply (89) of electricity to said primary chamber, and a separate secondary chamber (75), said primary chamber being sealed closed to prevent, or indicate, unauthorised entry to said primary chamber, but in which said secondary chamber is accessible to a user for electrical connections; said housing further comprising an earth (83, 100) common to said primary chamber (74) and said secondary chamber (75).

3. A street furniture electricity supply unit according to claim 2, in which said housing is additionally provided with a dividing wall to separate said primary and secondary chambers.

4. A street furniture electricity supply unit according to claim 2 or Claim 3, in which said secondary chamber (75) is removable from said primary chamber (74).

5. A street furniture cut-out assembly (3) having a cut-out unit (2) and an electricity supply unit (1), the electricity supply unit being in accordance with any preceding claim.

6. A street furniture cut-out assembly according to claim 5 in which the cut out unit (2) has a cover member (13) which is movable between an open and a closed condition, movement of the cover member (13), to the open condition causing the cut-out unit (2) to be isolated from the supply (89) of electricity.

7. A street furniture cut-out assembly according to Claim 6, in which the cover member (13), or a housing with which the cover member (13) co-operates, has a test port to enable diagnostic tests to be performed on said cut-out unit with the cover member in place; or the cover member or housing having built-in diagnostic test means.

8. An electrically powered item of street furniture, such as a lampost, bollard, illuminated sign, traffic light, or the like having an electricity supply unit (1) in accordance with claim 1, a street furniture electricity supply unit (1) in accordance with any one of claims 2 to 4, or a street furniture cut-out assembly (3) in accordance with any one of Claims 5 to 7.

9. A method of wiring an item of street furniture into a mains supply of electricity comprising the steps of connecting said mains supply to a primary chamber (74) of a power supply unit (1), sealing said primary chamber (74), and connecting a cut-out unit (2) of said item of street furniture to said power supply unit (1).

10. A housing component (60) adapted to be fitted to a cut-out unit of street furniture having electrical components, said housing component in use assisting to cover or enclose said electrical components of said cut-out unit and having a test port to enable diagnostic tests to be performed on said cut-out unit with said housing component in place, or having a built-in diagnostic test means.

11. A cut-out unit for street furniture having either diagnostic testing means provided with it, or a test port to enable diagnostic testing to be carried out.

12. A kit comprising a cover member (60), having a diagnostic display facility, or a test port, and a cut-out unit (1) having a cover (13) with no diagnostic testing.

13. A separable switching or cut-out unit comprising a switch unit and a supply unit, said switch unit being detachable from and re-connectable to said supply unit.

14. A switch comprising a first component and a second component, said second component being a movable component, movable between a closed condition in which said switch is in a closed position and an open condition in which the switch is in an open position, one of said components incorporating a cut-out unit for street furniture.
